# EUROPEAN PATENT SPECIFICATION

(11) **EP 3 793 296 B1**
(45) Date of publication and mention of the grant of the patent: **05.07.2023**
(21) Application number: 19799869.3
(22) Date of filing: 31.01.2019
(51) Int. Cl.: H04W 76/14, H04W 72/04

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 07.05.2018 WO PCT/CN2018/085861; 19.07.2018 WO PCT/CN2018/096350; 20.08.2018 WO PCT/CN2018/101330; 21.09.2018 WO PCT/CN2018/107120; 01.11.2018 WO PCT/CN2018/113520
(43) Date of publication of application: 17.03.2021
(73) Proprietor: GUANGDONG OPPO MOBILE TELECOMMUNICATIONS CORP., LTD., Dongguan Guangdong 523860 (CN)
(72) Inventor: LU, Qianxi, Dongguan, Guangdong 523860 (CN)
(74) Representative: Novagraaf Technologies
(86) International application number: PCT/CN2019/074303
(87) International publication number: WO 2019/214301

(56) References cited:
- EP-A1- 3 089 535
- CN-A- 104 105 217
- CN-A- 104 185 183
- CN-A- 104 754 748
- CN-A- 104 936 292
- ERICSSON: "Clarification to Mapping Between Service Types and V2X Frequencies", 3GPP DRAFT; 36300_CR1067_(REL-14)_R2-1711858 - CLARIFICATION TO MAPPING BETWEEN SERVICE TYPES AND V2X FREQUENCIES_V2, 3RD GENERATION PARTNERSHIP PROJECT (3GPP), MOBILE COMPETENCE CENTRE ; 650, ROUTE D , vol. RAN WG2, no. Prague, Czech Republic; 20171009 - 20171013 13 October 2017 (2017-10-13), XP051355896, Retrieved from the Internet: URL:http://www.3gpp.org/ftp/tsg_ran/WG2_RL 2/TSGR2_99bis/Docs/ [retrieved on 2017-10-13]

## Description

This application claims priority to the PCT application PCT/CN2018/085861 submitted before China National Intellectual Property Administration (CNIPA) on May 7, 2018 and titled "COMMUNICATION METHOD AND TERMINAL", to the PCT application PCT/CN2018/096350 submitted before CNIPA on July 19, 2018 and titled "COMMUNICATION METHOD AND TERMINAL", to the PCT application PCT/CN2018/101330 submitted before CNIPA on August 20, 2018 and titled "COMMUNICATION METHOD AND TERMINAL", to the PCT application PCT/CN2018/107120 submitted before CNIPA on September 21, 2018 and titled "COMMUNICATION METHOD AND DEVICE", and to the PCT application PCT/CN2018/113520 submitted before CNIPA on November 1, 2018 and titled "COMMUNICATION METHOD AND TERMINAL".

### TECHNICAL FIELD

Embodiments of the present disclosure generally relate to communication technologies, and more particularly, to a communication method for sidelink and to a terminal device.

### BACKGROUND

The Internet of vehicles system uses a Device-to-Device (D2D)-based sidelink (SL) transmission technology. In traditional Long-Term Evolution (LTE) system, communication data is received or sent via a base station. The Internet of vehicles system uses a terminal-to-terminal direct communication which is different from the communication in the traditional LTE system, and has higher spectrum efficiency and lower transmission delay.

In the sidelink communication, the base station can allocate resources for the terminal-to-terminal communication, or the terminals can adopt a sensing + reservation resource selection method.

In the sidelink communication, a scenario where there is at least one carrier or resource pool may exist. How to select resources in this scenario is an urgent problem to be solved.

Subject-matter related to the present disclosure is disclosed by EP3089535.

### SUMMARY

The invention is defined by the independent claims. Embodiments of the present disclosure provide a communication method for sidelink and a terminal device which can implement resource selection for sidelink communication in a scenario where there is at least one resource pool.

### BRIEF DESCRIPTION OF THE DRAWINGS

FIG. 1 is a schematic diagram showing an application scenario of a sidelink according to an embodiment of the present disclosure.
FIG. 2 is a schematic diagram showing another application scenario of a sidelink according to an embodiment of the present disclosure.
FIG. 3 is a schematic flowchart of a communication method for sidelink according to an embodiment of the present disclosure.
FIG. 4 is a schematic flowchart of a communication method for sidelink according to an embodiment of the present disclosure.
FIG. 5 is a schematic diagram showing resource selection according to an embodiment of the present disclosure.
FIG. 6 is a schematic flowchart of a wireless communication method according to an embodiment of the present disclosure.
FIG. 7 is a schematic flowchart of a wireless communication method.
FIG. 8 is a schematic block diagram of a terminal.
FIG. 9 is a schematic block diagram of a network device.
FIG. 10 is a schematic block diagram of a terminal.
FIG. 11 is a schematic block diagram of a communication device.
FIG. 12 is a schematic block diagram of a chip.
FIG. 13 is a schematic block diagram of a communication system.
FIG. 14 is a schematic block diagram of a communication system.

### DETAILED DESCRIPTION

Technical solutions in embodiments of the present disclosure will be clearly and completely described below with reference to drawings.

It should be understood that the technical solutions of embodiments of the present disclosure can be applied to various communication systems, such as: a Global System of Mobile Communication (GSM) system, a Code Division Multiple Access (CDMA) system, a Wideband Code Division Multiple Access (WCDMA) system (for example, a system corresponding to Release 15 (Rel-15)), a Long Term Evolution (LTE) system, a LTE Frequency Division Duplex (FDD) System, a LTE Time Division Duplex (TDD) system, a Universal Mobile Telecommunication System (UMTS), or a future 5G communication system.

Various embodiments are described in conjunction with a terminal device. The terminal device can also refer to User Equipment (UE), access terminal, user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a personal digital assistant (PDA), a handheld device with wireless communication functions, a computing device or other processing device connected to a wireless modem, an in-vehicle device, a wearable device, a terminal device in a future 5G network or a terminal device in a future evolved Public Land Mobile Network (PLMN).

Various embodiments are described in conjunction with a network device. A network device can be a device used to communicate with terminal devices, for example, the network device can be a base station (Base Transceiver Station, BTS) in the GSM system or CDMA, or a base station (NodeB, NB) in the WCDMA system, or the network device can be the evolved base station (Evolutional Node B, eNB or eNodeB) in the LTE system, or the network device can be a relay station, an access point, an in-vehicle device, a wearable device, a network side device in a future 5G network or a network side device in a future evolved PLMN network.

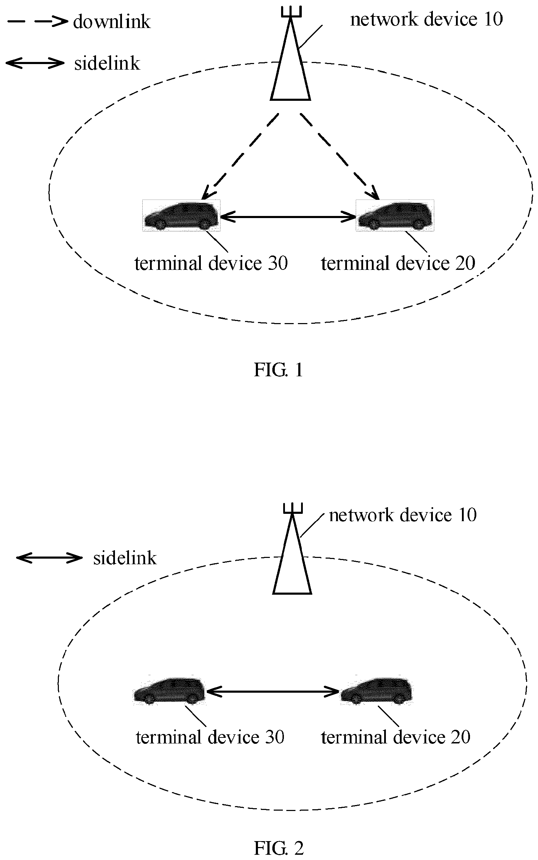

FIG. 1 and FIG. 2 are schematic diagrams showing an application scenario of the present disclosure. FIG. 1 exemplarily shows one network device and two terminal devices. According to other embodiments, the wireless communication system may include multiple network devices and the coverage of each network device may include other numbers of terminal devices, and embodiments of the present disclosure do not impose specific limitations on this. In addition, the wireless communication system may also include other network entities such as Mobile Management Entity (MME), Serving Gateway (S-GW), Packet Data Network Gateway (P-GW), etc., and embodiments of the present disclosure do not impose specific limitations on this.

For example, a terminal device 20 and a terminal device 30 can communicate with each other in a D2D communication mode. When performing the D2D communication, the terminal device 20 and the terminal device 30 directly communicate with each other through a D2D link, that is, a sidelink (SL). For example, as shown in FIG. 1 or FIG. 2, the terminal device 20 and the terminal device 30 directly communicate with each other via a sidelink. In FIG. 1, the terminal device 20 and the terminal device 30 communicate with each other via a sidelink, and the transmission resources are allocated by the network device.

The scenario shown in FIG. 1 can be used in a V2V scenario, and the mode shown in FIG. 2 can be referred to as mode 3, where the transmission resources of the on-vehicle terminals are allocated by the base station, and the on-vehicle terminals are on the side send data on the sidelink according to the resources allocated by the base station. The base station can allocate resources for a single transmission to the terminals, or allocate resources for semi-static transmission to the terminals.

In FIG. 2, the terminal device 20 and the terminal device 30 communicate via a sidelink, and the transmission resources are independently selected by the terminal devices, and the network device does not need to allocate transmission resources.

The scenario shown in FIG. 1 may be used in a V2V scenario, and the mode shown in FIG. 2 may be referred to as mode 4. The on-vehicle terminals adopt a sensing + reservation transmission mode. The on-vehicle terminal obtains a set of available transmission resources in the resource pool by sensing, and the terminal randomly selects a resource from the set for data transmission. Because the services in the Internet of Vehicles system have a periodic characteristic, the terminals usually adopt a semi-static transmission method, that is, after a terminal selects a transmission resource, it will continue to use the resource in multiple transmission cycles, thereby reducing the probability of resource reselection and resource conflict. The terminal carries the information to reserve resources for the next transmission in the control information of this transmission, so that other terminals can determine whether this resource is reserved and used by the user by detecting the control information of the user, thereby reducing resource conflicts.

The D2D communication method can be used for Vehicle to Vehicle (V2V) communication or Vehicle to Everything (V2X) communication, or enhanced (cellular) Vehicle to Everything (eV2X). In V2X communication, X can generally refer to any device with wireless receiving and sending capabilities, for example but not limited to a slow-moving wireless device, a fast-moving on-vehicle device, or a network control node with wireless sending and receiving capabilities. It should be understood that the embodiments of the present invention are mainly applied to the scenario of V2X communication, but can also be applied to any other D2D communication scenario, which is not limited in the embodiments of the present disclosure.

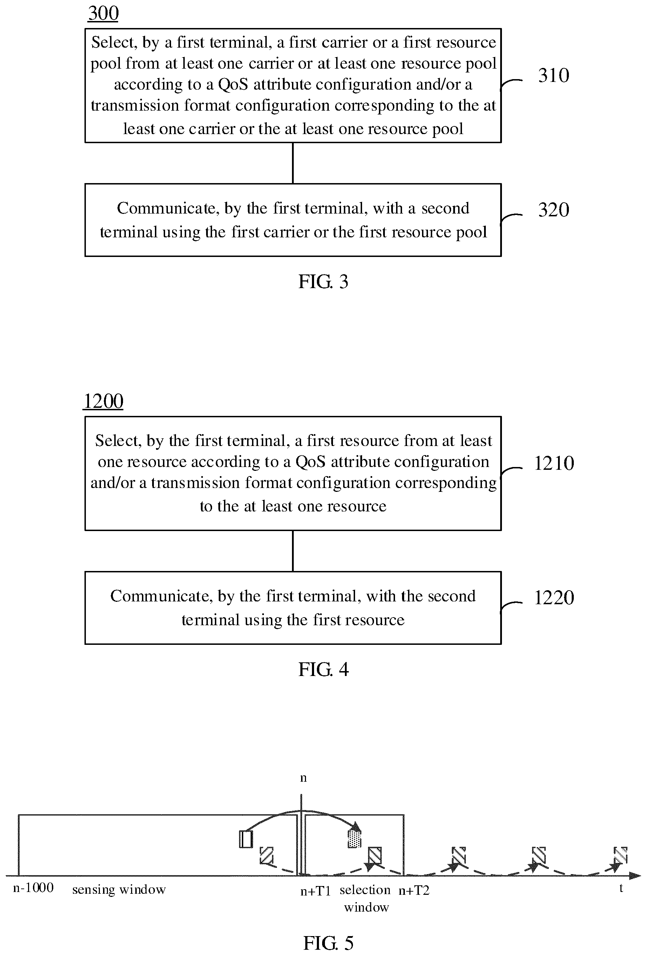

FIG. 3 is a schematic flowchart of a communication method 300 for a sidelink according to an embodiment of the present disclosure. The method 300 includes at least part of the following content.

It should be understood that, in the following description, the first terminal may be a terminal for sending data, and the second terminal may be a terminal for receiving data. In this case, the first terminal selects a target resource for sending data to the second terminal. Alternatively, the first terminal may a terminal for receiving data, and the second terminal may be a terminal for sending data. In this case, the first terminal selects a target resource for receiving the data sent by the second terminal.

In 310, the first terminal selects a first carrier or a first resource pool from at least one carrier or at least one resource pool according to a QoS attribute configuration and/or a transmission format configuration corresponding to the at least one carrier or the at least one resource pool.

In 320, the first terminal communicates with the second terminal using the first carrier or the first resource pool.

FIG. 4 is a schematic flowchart of a communication method 1200 for a sidelink according to an embodiment of the present disclosure. The method 1200 includes at least part of the following content.

It should be understood that, in the following description, the first terminal may be a terminal for sending data, and the second terminal may be a terminal for receiving data. In this case, the first terminal selects a target resource for sending data to the second terminal. Alternatively, the first terminal may a terminal for receiving data, and the second terminal may be a terminal for sending data. In this case, the first terminal selects a target resource for receiving the data sent by the second terminal.

In 1210, the first terminal selects a first resource from at least one resource according to a QoS attribute configuration and/or a transmission format configuration corresponding to the at least one resource.

In 1220, the first terminal communicates with the second terminal using the first resource.

The implementation of the method 300 and the method 1200 will be described below, and the specific implementations described below may be adapted to the method 300 or the method 1200.

In embodiments of the present disclosure not covered by the claims, the at least one carrier is a carrier that can be used for sidelink communication, and each carrier can be configured with at least one resource pool. The resource pool can include multiple resources for implementing the sidelink communication between terminals.

Each carrier may have a QoS attribute configuration and/or a transmission format configuration.

The QoS attribute configurations and/or transmission format configurations of different carriers may be the same or different.

In embodiments of the present disclosure, when a resource pool is configured for one carrier, the QoS attribute configuration and/or transmission format configuration of the carrier may be the QoS attribute configuration and/or transmission format configuration of the one resource pool.

In embodiments of the present disclosure, each resource in the at least one resource may have its own QoS attribute configuration and/or transmission format configuration. According to the QoS attribute configuration and/or transmission format configuration of each resource, the first resource is selected from the at least one resource.

The resource mentioned in embodiments of the present disclosure may be a resource having at least one of the following dimensions: time domain, frequency domain, code domain, or space domain.

In embodiments of the present disclosure, the QoS attribute may include a time T2, and may also include other attributes used to characterize the quality of service.

In embodiments of the present disclosure, when a carrier is configured with multiple resource pools, and each resource pool has a QoS attribute configuration, the QoS attribute configuration of the carrier may have multiple values (for one type of QoS attribute), or the QoS attribute configuration of the carrier may be the average value of the multiple values, etc.

Alternatively, when a carrier is configured with multiple resource pools, and each resource pool has a transmission format configuration, the transmission format configuration of the carrier may have multiple values.

In embodiments of the present disclosure, when a carrier is configured with multiple resources and each resource has a QoS attribute configuration, the QoS attribute configuration of the carrier may have multiple values (for one type of QoS attribute), or, the QoS attribute configuration of the carrier may be an average value of the multiple values.

Alternatively, when a carrier is configured with multiple resources, and each resource has a transmission format configuration, the transmission format configuration of the carrier may have multiple values.

In embodiments of the present disclosure, the QoS attribute configuration of the carrier may also be the QoS configuration of a resource pool for the current location of the first terminal and/or the second terminal, and the resource pool corresponds to the carrier. If there are multiple available carriers at the current location, the QoS configuration may have multiple values, or may be an average of the multiple values.

In embodiments of the present disclosure, the transmission format configuration of the carrier may also be the transmission format configuration of a resource pool for the current location of the first terminal and/or the second terminal, and the resource pool corresponds to the carrier. If there are multiple available carriers at the current location, the transmission format configuration may have multiple values, or may be an average of the multiple values.

In embodiments of the present disclosure, the at least one resource pool may correspond to one carrier, or may correspond to more than one carrier.

Each resource pool may have a time T2 configuration and/or a transmission format configuration.

In embodiments of the present disclosure, the time T2 configuration of a resource pool may refer to the maximum allowable time delay of a time moment when data transmission is performed using the resources in the resource pool with respect to a certain time moment. According to embodiments, the certain time moment may be the time moment when the physical layer reports the sensing result of the carrier sensing to the Media Access Control (MAC) layer. Optionally, the event that the physical layer reports the sensing result to the MAC layer may be triggered by an event that the terminal receives a data packet.

In the embodiment of the present disclosure, the time T2 configuration of a resource may refer to the maximum allowable time delay of a time moment when data transmission is performed using the resource with respect to a certain time moment. According to embodiments, the certain time moment may be the time moment when the physical layer reports the sensing result of the carrier sensing to the Media Access Control (MAC) layer. Optionally, the event that the physical layer reports the sensing result to the MAC layer may be triggered by an event that the terminal receives a data packet.

In embodiments of the present disclosure, the time T2 configuration of a carrier may refer to the maximum allowable time delay of a time moment when data transmission is performed using a resource in a resource pool corresponding to the carrier with respect to a certain time moment. According to embodiments, the certain time moment may be the time moment when the physical layer reports the sensing result of the carrier sensing to the Media Access Control (MAC) layer. Optionally, the event that the physical layer reports the sensing result to the MAC layer may be triggered by an event that the terminal receives a data packet.

For example, for the first terminal, when a new data packet arrives at a time moment n, resource selection needs to be performed. The terminal, based on the sensing result of a certain time period in the past (for example, 1 second), selects a resource in [n+T1, n+ T2] milliseconds for sending subsequent data.

In embodiments of the present disclosure, the time T2 configuration may also be referred to as a maximum delay configuration or a maximum allowable delay configuration.

In embodiments of the present disclosure, T2 is a value in the order of millisecond, for example, 20 milliseconds<=T2<=100 milliseconds.

In embodiments of the present disclosure, T1 may be a value in the order of millisecond, for example, T1<=4 milliseconds.

In embodiments of the present disclosure, the transmission format may be defined by at least one of the following: a resource for the data to be transmitted, a coding and decoding mechanism of the data to be transmitted, a parameter set of the data to be transmitted (for example, the subcarrier interval, etc.), a communication mode and a reference signal for the data to be transmitted.

That is to say, for different transmission formats, at least one of the resource for the data to be transmitted, the coding and decoding mechanism of the data to be transmitted, the parameter set of the data to be transmitted (for example, the subcarrier interval, etc.), the communication mode and the reference signal for the data to be transmitted varies.

In embodiments of the present disclosure, the transmission format is defined by at least one of the following: a frequency attribute of a resource, a time attribute of a resource, an attribute of a resource authorization, or an associated source address and/or target address.

That is, for different transmission formats, at least one of the frequency attribute of the resource, the time attribute of the resource, the attribute of the resource authorization, or the associated source address and/or target address varies.

For example, for different transmission formats corresponding to resource pools or carriers, at least one of the time attribute of the resources available in the resource pool or carrier (for example, the number of time units such as symbols, or time slots of an available resource, the time length of a symbol), the frequency attribute of the resource available in the resource pool or carrier (for example, the bandwidth occupied by the entire resource pool or the carrier, the subcarrier interval, the frequency of an available resource), the attribute of the resource authorization available in the resource pool or the carrier (for example, a size of the resource corresponding to a resource authorization), the source address and/or target address associated with the resource pool or carrier (for example, different resource pools and/or carriers are associated with different source addresses and/or target addresses; and when different resource pools and/or carriers are associated with source addresses, the terminals corresponding to the source addresses use the resource pools or carriers to send data; when different resource pools and/or carriers are associated with target addresses, if data needs to be transmitted to a certain target address, a resource pool or carrier associated with the target address is used to send the data to a terminal corresponding to the target address) varies.

For example, for different transmission formats corresponding to resources, at least one of the time attribute of the resources (for example, the number of symbols or time slots, the time length of a symbol), the frequency attribute (for example, the bandwidth occupied by the resource, the subcarrier interval, the frequency), the source address and/or target address associated with the resource (for example, different resources are associated with different source addresses and/or target addresses; and when different resources are associated with source addresses, the terminals corresponding to the source addresses use the resources to send data; when different resources are associated with target addresses, if data needs to be transmitted to a certain target address, a resource associated with the target address is used to send the data to a terminal corresponding to the target address) varies.

It should be understood that embodiments of the present disclosure introduce multiple definition methods of the transmission format, and the multiple definition methods can be used in combination. For brevity, details are not described herein again.

In embodiments of the present disclosure, the transmission format configuration and/or the QoS attribute configuration corresponding to the at least one carrier or the at least one resource pool are configured by a higher layer of the first terminal, configured by the network device, or configured by a terminal other than the first terminal.

In embodiments of the present disclosure, the transmission format configuration and/or the QoS attribute configuration corresponding to the at least one resource are configured by a higher layer of the first terminal, configured by the network device, or configured by a terminal other than the first terminal.

According to embodiments, the communication mode may be a unicast communication mode, a multicast communication mode, or a broadcast communication mode.

In the sidelink communication scenario of embodiments of the present disclosure, if the communication mode is the unicast communication mode, the first terminal may communicate with one terminal in the unicast mode; if the communication mode is the multicast communication mode, the first terminal can communicate with a group of terminals in the multicast mode; if the communication mode is the broadcast communication mode, the first terminal can communicate with other terminals in the broadcast mode.

As an example, when a feature varies in different systems, it can be determined that the transmission formats of the different systems are different.

For example, if the coding and decoding mechanism of a system A is the same as the coding and decoding mechanism of a system B, and the reference signal of the system A is different from the reference signal of the system B, it can be determined that the transmission format of the system A is different from the transmission format of the system B.

As an example, when two features are different in different systems, it can be determined that the transmission formats of the different systems are different.

For example, if the reference signal of a system A is the same as the reference signal of the system B, and the coding and decoding mechanism of the system A is different from the coding and decoding mechanism of the system B, it can be determined that the transmission format of the system A is the same as the transmission format of the system B.

For another example, if the reference signal of the system A is different from the reference signal of the system B, and the coding and decoding mechanism of the system A is different from the coding and decoding mechanism of the system B, it can be determined that the transmission format of the system A is different from the transmission format of the system B.

As an example, when three or more features are different in different systems, it can be determined that the transmission formats of the different systems are different.

For example, if the reference signal of a system A is the same as the reference signal of a system B, the coding and decoding mechanism of the system A is different from the coding and decoding mechanism of the system B, and the logical channel of system A is different from the logical channel of the system B, it can be determined that the transmission format of the system A is the same as the transmission format of the system B.

For another example, if the reference signal of a system A is different from the reference signal of a system B, the coding and decoding mechanism of the system A is different from the coding and decoding mechanism of the system B, and the logical channel of the system A is different from the logical channel of the system B, it can be determined that the transmission format of the system A is different from the transmission format of the system B.

In embodiments of the present disclosure, different communication standards (or systems) correspond to different transmission formats. The communication standard (or system) can be LTE or New Radio (NR).

Or, for LTE, the communication standards can be further divided into the communication standards of Release 14 and Release 15.

The transmission formats of different communication standards are not compatible.

For example, the receiving end of the LTE system cannot receive the data having the transmission format of the NR system sent by the transmitting end of the NR system.

Or, the sending end of the LTE system cannot send data with the transmission format of the NR system.

In embodiments of the present disclosure, the communication mode includes a resource selection mode.

The resource selection mode mentioned in embodiments of the present disclosure is a mode in which a network schedules resources, a mode in which a terminal autonomously selects resources, or a mode in which other terminals assist in resource selection.

A resource in embodiments of the present disclosure may correspond to a resource selection mode. For example, a resource selection mode of a resource can be a mode in which a network schedules resources, that is, the resource is scheduled by the network. If a resource selection mode of a resource is a mode in which a terminal autonomously selects resources, it means that the resource can be autonomously selected by the terminal. If the resource selection mode of a resource is a mode in which other terminals assist in resource selection, it means that the resource is selected with assistance of other terminals. Then, the terminal can select resources that meet the requirements of the resource selection mode according to the resource selection mode of each resource.

Alternatively, a carrier in embodiments of the present disclosure may correspond to a resource selection mode. For example, a resource selection mode of a carrier can be a mode in which a network schedules resources, that is, the resources of the carrier are scheduled by the network. If a resource selection mode of a carrier is a mode in which a terminal autonomously selects resources, it means that the resources of the carrier can be autonomously selected by the terminal. If the resource selection mode of a carrier is a mode in which other terminals assist in resource selection, it means that the resources of the carrier are selected with assistance of other terminals. Then, the terminal can select carriers that meet the requirements of the resource selection mode according to the resource selection mode of each carrier.

In embodiments of the present disclosure, based on the QoS attribute configuration and/or the transmission format configuration of the first carrier or the first resource pool, and a QoS attribute requirement and/or a transmission format requirement of data to be transmitted, the first terminal may select, from the data to be transmitted, data which is to be transmitted by the target resource. In embodiments of the present disclosure, the QoS attribute requirement and/or the transmission format requirement of the data to be transmitted are configured by a higher layer of the first terminal, configured by the network device, or configured by a terminal other than the first terminal.

Specifically, after selecting the first carrier or the first resource pool, the first terminal can determine from the data to be transmitted which data can be sent on a certain resource pool corresponding to the first carrier or on the first resource pool. Specifically, the determination may be made based on the QoS attribute configuration and/or transmission format configuration of the first carrier and/or the first resource pool, and the QoS attribute requirement and/or transmission format requirement of the data to be transmitted. For example, if the QoS attribute configuration of the first carrier or the first resource pool meets the QoS attribute requirement of certain data, the data can be sent using the resource pool of the first carrier or the resources in the first resource pool. For example, if the transmission format configuration of the first carrier or the first resource pool meets the transmission format requirement of certain data, the data can be sent using the resource pool of the first carrier or the resources in the first resource pool.

In embodiments of the present disclosure, the first terminal can select, from the data to be transmitted, data which can be transmitted using the target resource (for example, the first resource), based on the QoS attribute configuration and/or transmission format configuration of the first resource, and the QoS attribute requirement and/or transmission format requirement of the data to be transmitted. In embodiments of the present disclosure, the QoS attribute requirement and/or the transmission format requirement of the data to be transmitted are configured by a higher layer of the first terminal, configured by a network device, or configured by a terminal other than the first terminal.

Specifically, after selecting the first resource, the first terminal can determine from the data to be transmitted which data can be sent on the first resource. Specifically, the determination can be made based on the QoS attribute configuration and/or transmission format configuration of the first resource, and the QoS attribute requirement and/or transmission format requirement of the data to be transmitted. For example, if the QoS attribute configuration of the first resource meets the QoS attribute requirement of certain data, the data can be sent using the first resource. For example, if the transmission format configuration of the first resource meets the transmission format requirement of certain data, the data can be sent using the first resource.

In embodiments of the present disclosure, the first terminal may select the first carrier or the first resource pool from the at least one carrier or the at least one resource pool, according to the QoS attribute configuration and/or the transmission format configuration corresponding to the at least one carrier or the at least one resource pool and at least one of the following:
a QoS attribute requirement of at least part of the data to be transmitted;
a transmission format requirement of at least part of the data to be transmitted;
a transmission mode of at least part of the data to be transmitted;
a channel busy ratio of the at least one carrier or the at least one resource pool; wherein the channel busy ratio can also be called channel occupancy ratio, etc;
a correspondence between a channel busy ratio requirement and a service priority identifier corresponding to the at least one carrier or the at least one resource pool; or
a service priority identifier of at least part of the data to be transmitted.

In embodiments of the present disclosure, the first terminal may select the first resource from the at least one resource, according to the QoS attribute configuration and/or the transmission format configuration corresponding to the at least one resource and at least one of the following:
a QoS attribute requirement of at least part of the data to be transmitted;
a transmission format requirement of at least part of the data to be transmitted;
a transmission mode of at least part of the data to be transmitted; or
a service priority identifier of at least part of the data to be transmitted.

The following will describe various implementations.

In an implementation, a carrier or resource pool may be selected from the at least one carrier or at least one resource pool based on the T2 time configuration corresponding to the at least one carrier or the at least one resource pool and the delay requirement of at least part of the data to be transmitted. The selected carrier or resource pool is a carrier or resource pool whose T2 delay configuration meets the delay requirement of the at least part of the data to be transmitted.

In an implementation, a carrier or resource pool may be selected from the at least one carrier or at least one resource pool based on the transmission format configuration corresponding to the at least one carrier or at least one resource pool and the transmission format requirement of at least part of the data to be transmitted. The selected carrier or resource pool is a carrier or resource pool whose transmission format configuration meets the transmission format requirement of the at least part of the data to be transmitted.

In an implementation, the carrier or the resource pool may be selected based on the channel busy ratio of the at least one carrier or the at least one resource pool. For example, the selected carrier or resource pool is a carrier or resource pool having the lowest channel busy ratio, or the selected carrier or resource pool is a carrier or resource pool having a channel busy ratio lower than a predetermined value.

In an implementation, a resource may be selected from the at least one resource pool based on the T2 time configuration corresponding to the at least one resource and the delay requirement of at least part of the data to be transmitted. The selected resource is a resource whose T2 delay configuration meets the delay requirement of at least part of the data to be transmitted.

In an implementation, a resource may be selected from the at least one resource based on the transmission format configuration corresponding to the at least one resource and the transmission format requirement of at least part of the data to be transmitted. The selected resource is a resource whose transmission format configuration meets the transmission format requirement of the at least part of the data to be transmitted.

In an implementation, a carrier or a resource pool may be selected based on the channel busy ratio of the at least one carrier or the at least one resource pool, the service priority identifier of the at least part of the data to be transmitted, and a correspondence between a channel busy ratio requirement and a service priority identifier corresponding to the at least one carrier or the at least one resource pool.

Each carrier or resource pool may correspond to a correspondence, and the correspondence may be used to indicate how at least one service priority identifier corresponds to at least one channel busy ratio requirement. The channel busy ratio requirement corresponding to a service priority identifier refers to the highest channel busy ratio expected by the priority corresponding to the service priority identifier. Or, the correspondences corresponding to multiple carriers or multiple resource pools are the same.

According to embodiments, the correspondence corresponding to a carrier may be a correspondence corresponding to a resource pool available at the location where the first terminal and/or the second terminal resides.

Therefore, the first terminal can determine the carrier or resource pool that meets the channel busy ratio requirement corresponding to the service priority identifier of the at least part of data to be transmitted, based on the channel busy ratio of at least part of the data to be transmitted, the correspondence, and the channel busy ratio of each carrier or resource pool.

In an implementation, the first carrier or the first resource pool may be determined based on the service priority identifier of the at least part of the data to be transmitted, and the time T2 configuration and/or the transmission format configuration corresponding to the at least one carrier or the at least one resource pool. For example, if there is a correspondence between service priority identifiers and time T2 configurations (and/or the transmission format configurations), a carrier or resource pool is selected based on the service priority identifier of the at least part of the data to be transmitted and the correspondence.

In embodiments of the present disclosure, the service priority identifier is used for the service priority of the data to be transmitted, and the service priority identifier may be a ProSe Per-Packet Priority (PPPP).

It should be understood that the multiple implementations described above can be used in combination, that is, various factors used in multiple implementations can be considered at the same time.

For example, carrier selection is performed based on the measured value of the Channel Busy Ratio (CBR) of each carrier. For example, the terminal selects a carrier with a CBR lower than a certain threshold, and the threshold varies depending on different PPPPs. In the selected carrier set, a carrier whose T2 configuration meets the delay requirement is selected, and further, in the selected carrier set, the terminal selects the carrier with the lowest CBR.

For example, carrier selection is performed based on the measured value of the CBR of each carrier. For example, the terminal selects a carrier with a CBR lower than a certain threshold, and the threshold varies depending on different PPPPs. In the selected carrier set, a carrier including a resource pool whose T2 configuration meets the delay requirement is selected; and further, in the selected carrier set, the terminal selects the carrier with the lowest CBR.

For example, carrier selection is performed based on the measured value of the CBR of each carrier. For example, the terminal selects a carrier with a CBR lower than a certain threshold, and the threshold varies depending on different PPPPs. In the selected carrier set, the terminal selects the carrier with the lowest CBR; further, on the selected carrier, a resource pool whose T2 configuration meets the requirement is selected.

It should be understood that, as mentioned above, there is a one-to-one correspondence between PPPPs and channel busy ratio requirements. In embodiments of the present disclosure, there may be a correspondence between PPPPs and delay requirements. For example, one PPPP of the data to be transmitted corresponds to one delay requirement.

In embodiments of the present disclosure, the first resource is a resource that meets at least one of the following conditions among the at least one resource:
having a QoS attribute configuration that meets the QoS attribute requirement of at least part of the data to be transmitted; or
having a transmission format configuration that meets the transmission format requirement of at least part of the data to be transmitted.

Specifically, the first resource may be determined from at least one resource according to the QoS attribute requirement and/or transmission format requirement of at least part of the data to be transmitted, the QoS attribute configuration of the first resource meets the QoS attribute requirement of at least part of the data to be transmitted, and/or the transmission format configuration meets the transmission format requirement of at least part the data to be transmitted.

In embodiments of the present disclosure, the first carrier is a carrier that satisfies at least one of the following conditions among the at least one carrier:
having the lowest channel busy ratio;
having a channel busy ratio that meets a channel busy rate requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

In embodiments of the present disclosure, in the case of selecting the first carrier from the at least one carrier, the first terminal selects the second resource pool from the at least part of the at least one resource pool corresponding to the first carrier according to a QoS attribute configuration and/or a transmission format configuration of at least part of the at least one resource pool corresponding to the first carrier.

That is, when the first carrier is selected, if the first carrier corresponds to multiple resource pools for selection, a resource pool can be selected from the multiple resource pools.

For the selection method of the second resource pool, the selection method of the first resource pool can be referred to.

In embodiments of the present disclosure, the second resource pool is a resource pool that satisfies at least one of the following conditions among the at least part of the at least one resource pool corresponding to the first carrier:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

In embodiments of the present disclosure, the first resource pool is a resource pool that satisfies at least one of the following conditions among the at least one resource pool:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

In embodiments of the present disclosure, the method 300 or 1200 may be used in the case of carrier or resource pool reselection.

For example, in a case that a currently used carrier or a currently used resource pool cannot meet a QoS attribute requirement of at least part of the data to be transmitted and/or at least part of the data to be transmitted is sent in a non-single transmission mode, the first carrier or the first resource pool is selected from the at least one carrier or the at least one resource pool.

For example, in a case that a currently used resource cannot meet a QoS attribute requirement of at least part of the data to be transmitted and/or at least part of the data to be transmitted is sent in a non-single transmission mode, the first resource is selected from the at least one resource.

In embodiment of the present disclosure, the transmission mode may be multiple transmissions, for example, periodic transmission.

In embodiments of the present disclosure, at least part of the data to be transmitted mentioned above may be all the data to be transmitted currently, or part of the data to be transmitted, for example, the data to be transmitted with a higher priority.

Of course, the method 300 or 1200 can also be applied to the case of initial selection of the carrier or resource pool.

According to embodiments, the first terminal may use the second resource pool corresponding to the first carrier to communicate with the second terminal.

Specifically, in the second resource pool or the first resource pool corresponding to the first carrier, the first terminal selects the target resource.

For example, when a new data packet arrives at a time moment n, resource selection is required. The terminal, based on the sensing result of a certain time period in the past (may be called sensing window), selects a resource in [n+T1, n+T2] milliseconds, where T1<=4; 20<=T2<=100, and [n+T1, n+T2] can be called a selection window.

The process for the terminal to select resources in the selection window can be as follows:

The terminal takes all available resources in the selection window as a set A, and the terminal performs an operation to exclude resources in set A.

If the terminal has no sensing result in some subframes (for example, the blocks filled with vertical lines in FIG. 5) in the sensing window, the resources on subframes (for example, the blocks filled with dots in FIG. 5) in the selection window corresponding to these subframes are excluded. The terminal can preset the corresponding relationship between the subframes in the sensing window and the selection window.

If the Physical Sidelink Control Channel (PSCCH) is detected by the terminal sensing window, its corresponding PSSCH-Reference Signal Receiving Power (RSRP) is higher than a threshold, and there is a resource conflict between the next transmission resource reserved by the control information and the data to be transmitted by the user, the user excludes the resource from the set A.

The terminal performs Sidelink-Received Signal Strength Indicator (S-RSSI) detection on the remaining resources in the set A, and sorts the resources according to the energy level, and puts 20% of the resources (relative to number of resources in the set A) which have low energy level into a set B.

The terminal selects a resource from the set B with an equal probability for data transmission.

According to embodiments, as shown in FIG. 5, when the first terminal selects a resource for transmission, the user will continue to use the reserved resource X times (for example, the blocks filled with diagonal lines in FIG. 5), and each time data is transmitted , X minus 1; when X is reduced to 0, the terminal will randomly generate a random number between [0,1] and compare it with a parameter probResourceKeep (P_resKeep). If the random number is greater than the parameter, the terminal will perform resource reselection. If the random number is less than the parameter, the terminal continues to use the resource and resets X.

According to embodiments, the first terminal may also use the second resource corresponding to the first carrier to communicate with the second terminal.

Specifically, the first terminal selects the target resource among the resources corresponding to the first carrier.

The second resource is a resource that meets at least one of the following conditions among at least part of the resources corresponding to the first carrier:
having a QoS attribute configuration that meets the QoS attribute requirement of at least part of the data to be transmitted; or
having a transmission format configuration that meets the transmission format requirements of at least part of the data to be transmitted.

In embodiments of the present disclosure, the first terminal selects a first carrier or a first resource pool which is used for communication with a second terminal from at least one carrier or at least one resource pool according to a QoS attribute configuration and/or a transmission format configuration corresponding to the at least one carrier or the at least one resource pool. Therefore, a carrier or resource pool that better meets the QoS attribute requirement and/or transmission format requirement of the data to be transmitted can be selected.

Alternatively, in embodiments of the present disclosure, the first terminal selects the first resource which is used for communicating with the second terminal from the at least one resource according to the QoS attribute configuration and/or the transmission format configuration corresponding to the at least one resource. Therefore, a resource that better meets the QoS attribute requirement and/or transmission format requirement of the data to be transmitted can be selected.

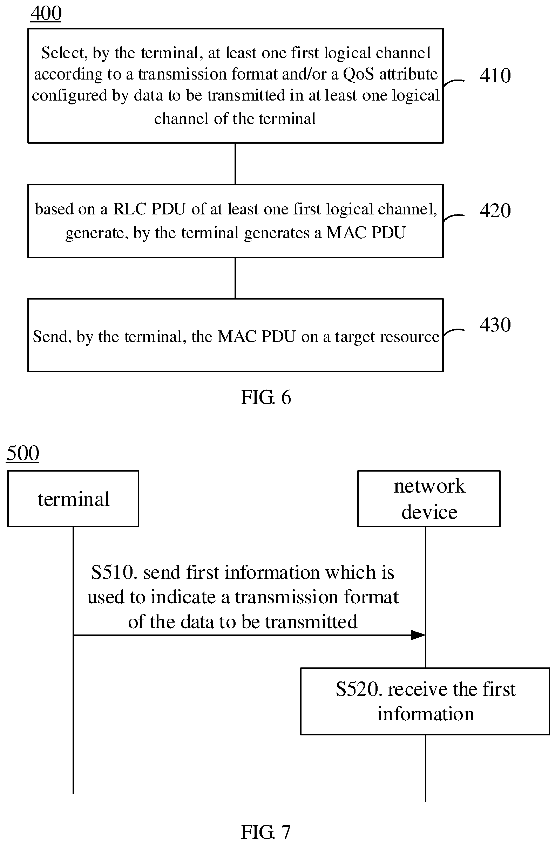

FIG. 6 is a schematic flowchart of a wireless communication method 400 according to an embodiment of the present disclosure. In embodiments of the present disclosure, the method 400 may be used for sidelink communication. Of course, this method can also be used for communication between a terminal and a network side.

As shown in FIG. 6, the method 400 includes at least part of the following content.

In 410, the terminal selects at least one first logical channel according to a transmission format and/or a QoS attribute configured by data to be transmitted in at least one logical channel of the terminal. The transmission format and/or QoS attribute required by the data to be transmitted may be configured by a higher layer of the terminal, configured by a network device, or configured by a terminal other than the terminal.

In embodiments of the present disclosure, the terminal selects a logical channel set; and according to the transmission format and/or QoS attribute configured by the data to be transmitted in the logical channel set of the terminal, the terminal selects the at least one first logical channel.

Specifically, before selecting the at least one first logical channel, the terminal device may first select a logical channel set, and after selecting the logical channel set, the terminal selects the first logical channel from the logical channel set.

The logical channels in the logical channel set have the same target address. That is, the division of logical channel sets may be based on target addresses, and each target address corresponds to a logical channel set, and a logical channel set may include at least one logical channel.

According to embodiments, the transmission format and/or QoS attribute configured by the data to be transmitted in the logical channel can be understood as the transmission format and/or QoS attribute required by the data to be transmitted in the logical channel, or understood as the transmission format and/or QoS attribute configured by the logical channel, or understood as the transmission format and/or QoS attribute required by the logical channel.

In embodiments of the present disclosure, the terminal determines a first transmission format; according to the first transmission format and the transmission format of the data to be transmitted in at least one logical channel, the terminal selects a first logical channel.

That is to say, the terminal can select the logical channel based on the specific transmission format and the transmission format of the data to be transmitted in each logical channel.

In embodiments of the present disclosure, the transmission format configured by the data to be transmitted in the first logical channel includes the first transmission format.

Of course, the transmission format configured by the data to be transmitted in the first logical channel may also include other transmission formats.

In embodiments of the present disclosure, the terminal determines the first transmission format according to the transmission format configured by the target resource and/or the transmission format configured by at least part of the data to be transmitted.

In embodiments of the present disclosure, the first transmission format includes at least one of the transmission formats configured by the target resource.

In embodiments of the present disclosure, the first transmission format includes at least one transmission format of transmission formats configured by at least part of the data to be transmitted.

Specifically, the transmission format configured by the target resource may be determined as the first transmission format.

Alternatively, the transmission format configured by at least part of the data to be transmitted may be determined as the first transmission format.

Alternatively, the transmission format configured jointly by the target resource and at least part of the data to be transmitted may be determined as the first transmission format.

In embodiments of the present disclosure, the terminal determines the first transmission format according to the QoS attribute configured by the target resource and/or the QoS attribute configured by at least part of the data to be transmitted.

Specifically, the terminal determines the first transmission format according to the QoS attribute configured by the target resource and/or the QoS attribute configured by the at least part of the data to be transmitted, and a correspondence between QoS attributes and transmission formats.

That is, the terminal device can be configured with the correspondence between QoS attributes and transmission formats. The transmission format (that is, the first transmission format) corresponding to the QoS attribute configured by the target resource and/or the QoS attribute configured by at least part of the data to be transmitted can be determined from the correspondence. The correspondence can be a correspondence between QoS attribute configurations of resources and transmission formats, and then the first transmission can be determined according to the QoS attribute configured by the target resource.

According to embodiments, the at least part of the data to be transmitted may be all the data to be transmitted currently, or part of the data to be transmitted currently, for example, the data to be transmitted with the highest or higher priority, or the data to be transmitted in the logical channel with the highest or higher priority.

In embodiments of the present disclosure, at least part of the data to be transmitted belongs to the data to be transmitted in at least one logical channel.

According to embodiments, the at least part of the data to be transmitted may belong to a part of the data to be transmitted included in at least one first logical channel.

It should be understood that, in addition to selecting the first logical channel according to the above-mentioned first transmission format, the terminal may select the first logical channel based on other methods. For example, the transmission formats may be prioritized, and a logical channel configured by a transmission format with the highest priorities in the at least one logical channel may be determined as the first logical channel.

In embodiments of the present disclosure, the transmission format may be defined by at least one of the following: a resource for the data to be transmitted, a coding and decoding mechanism of the data to be transmitted, a parameter set of the data to be transmitted (for example, the subcarrier interval, etc.), a communication mode and a reference signal for the data to be transmitted.

That is to say, for different transmission formats, at least one of the resource for the data to be transmitted, the coding and decoding mechanism of the data to be transmitted, the parameter set of the data to be transmitted (for example, the subcarrier interval, etc.), the communication mode and the reference signal for the data to be transmitted varies.

The communication mode is a communication mode in which the terminal communicates with other terminals.

According to embodiments, the communication mode may be a unicast communication mode, a multicast communication mode, or a broadcast communication mode.

According to embodiments, when the method 400 is applied to a sidelink communication scenario, if the communication mode is the unicast communication mode, the terminal can communicate with one terminal in the unicast mode; if the communication mode is the multicast communication mode, the terminal can communicate with a group of terminals in the multicast mode; if the communication mode is the broadcast communication mode, the terminal can communicate with other terminals in the broadcast mode.

In embodiments of the present disclosure, the transmission format is defined by at least one of the following: a frequency attribute of a resource, a time attribute of a resource, an attribute of a resource authorization, or an associated source address and/or target address.

That is, for different transmission formats, at least one of the frequency attribute of the resource, the time attribute of the resource, the attribute of the resource authorization, or the associated source address and/or target address varies.

For example, for different transmission formats configured by the data to be transmitted, at least one of the time attribute of the resources available for the data to be transmitted (for example, the number of time units such as symbols or time slots of an available resource, the time length of a symbol), the frequency attribute of the resource available for the data to be transmitted (for example, the bandwidth occupied by all available resources, the subcarrier interval, the frequency of an available resource), the attribute of the resource authorization available for the data to be transmitted (for example, a size of the resource corresponding to a resource authorization), the source address and/or target address associated with the data to be transmitted (the source address associated with the data to be transmitted refers to that the data to be transmitted is sent by a terminal corresponding to the source address, and target address associated with the data to be transmitted refers to that the data to be transmitted is sent to a terminal corresponding to the target address) varies.

In embodiments of the present disclosure, different communication standards (or systems) correspond to different transmission formats. The communication standard (or system) can be LTE or New Radio (NR).

Or, for LTE, the communication standards can be further divided into the communication standards of Release 14 and Release 15.

The transmission formats of different communication standards are not compatible.

For example, the receiving end of the LTE system cannot receive the data having the transmission format of the NR system sent by the transmitting end of the NR system.

Or, the sending end of the LTE system cannot send data with the transmission format of the NR system.

In embodiments of the present disclosure, the communication mode includes a resource selection mode.

The resource selection mode mentioned in embodiments of the present disclosure is a mode in which a network schedules resources, a mode in which a terminal autonomously selects resources, or a mode in which other terminals assist in resource selection.

A resource in embodiments of the present disclosure may correspond to a resource selection mode. For example, a resource selection mode of a resource can be a mode in which a network schedules resources, that is, the resource is scheduled by the network. If a resource selection mode of a resource is a mode in which a terminal autonomously selects resources, it means that the resource can be autonomously selected by the terminal. If the resource selection mode of a resource is a mode in which other terminals assist in resource selection, it means that the resource is selected with assistance of other terminals. Then, the terminal can select resources that meet the requirements of the resource selection mode according to the resource selection mode of each resource.

Alternatively, a carrier in embodiments of the present disclosure may correspond to a resource selection mode. For example, a resource selection mode of a carrier can be a mode in which a network schedules resources, that is, the resources of the carrier are scheduled by the network. If a resource selection mode of a carrier is a mode in which a terminal autonomously selects resources, it means that the resources of the carrier can be autonomously selected by the terminal. If the resource selection mode of a carrier is a mode in which other terminals assist in resource selection, it means that the resources of the carrier are selected with assistance of other terminals. Then, the terminal can select carriers that meet the requirements of the resource selection mode according to the resource selection mode of each carrier.

It should be understood that embodiments of the present disclosure introduce multiple definition methods of the transmission format, and the multiple definition methods can be used in combination. For brevity, details are not described herein again.

In the embodiment of the present disclosure, the terminal determines a first QoS attribute; and according to the first QoS attribute and the QoS attribute configured by the data to be transmitted in the at least one logical channel, the terminal selects the first logical channel.

In other words, the terminal can select the logical channel based on a specific QoS attribute and the QoS attribute configured by the data to be transmitted in each logical channel.

In embodiments of the present disclosure, the QoS attribute configured by the data to be transmitted in the first logical channel includes the first QoS attribute.

Of course, the QoS attribute configured by the data to be transmitted in the first logical channel may also include other QoS attributes.

In embodiments of the present disclosure, the terminal determines the first QoS attribute according to the QoS attribute configured by the target resource and/or the QoS attribute configured by at least part of the data to be transmitted.

In embodiments of the present disclosure, the first QoS attribute includes at least one of the QoS attributes configured by the target resource.

In embodiments of the present disclosure, the first QoS attribute includes at least one of the QoS attributes configured by at least part of the data to be transmitted.

Specifically, the QoS attribute configured by the target resource may be determined as the first QoS attribute.

Alternatively, the QoS attribute configured by at least part of the data to be transmitted may be determined as the first QoS attribute.

Alternatively, the QoS attribute jointly configured by the target resource and at least part of the data to be transmitted may be determined as the first QoS attribute.

In embodiments of the present disclosure, the terminal determines the first transmission format according to the transmission format configured by the target resource and/or the transmission format configured by at least part of the data to be transmitted.

Specifically, the terminal determines the first QoS attribute according to the transmission format configured by the target resource and/or the transmission format configured by at least part of the data to be transmitted, and the correspondence between QoS attributes and transmission formats.

According to embodiments, the at least part of the data to be transmitted may be all the data to be transmitted currently, or part of the data to be transmitted currently, for example, the data to be transmitted with the highest or higher priority, or the data to be transmitted in the logical channel with the highest or higher priority.

In embodiments of the present disclosure, at least part of the data to be transmitted belongs to the data to be transmitted in at least one logical channel.

According to embodiments, the at least part of the data to be transmitted may belong to a part of the data to be transmitted included in the at least one first logical channel.

It should be understood that in addition to selecting the first logical channel based on the aforementioned first QoS attribute, the terminal may also select the first logical channel based on other methods. For example, the QoS attributes may be prioritized, a logical channel configured by the QoS attribute with the highest priority in the at least one logical channel may be determined as the first logical channel.

In 420, based on a Radio Link Control (RLC) Protocol Data Unit (PDU) of at least one first logical channel, the terminal generates a Media Access Control (MAC) PDU.

In 430, the terminal sends the MAC PDU on a target resource.

In embodiments of the present disclosure, the terminal selects at least one first logical channel according to the transmission format and/or QoS attribute of the data configuration to be transmitted in the at least one logical channel of the terminal; based on the RLC PDU of the at least one first logical channel, the terminal generates the MAC PDU which is to be transmitted on the target resource. Embodiments of the present disclosure can realize the transmission of data based on the transmission format of the logical channel.

FIG. 7 is a schematic flowchart of a wireless communication method 500 according to an embodiment of the present disclosure. In embodiments of the present disclosure, the method 500 may be used for communication between a terminal and a network side. Of course, this method can also be used for sidelink communications.

As shown in FIG. 7, the method 500 may include at least part of the following content.

In 510, the terminal sends first information to the network device. The first information is used to indicate a transmission format of the data to be transmitted. Correspondingly, the network device receives the first information sent from the terminal.

In embodiments of the present disclosure, the transmission format may be defined by at least one of the following: a resource for the data to be transmitted, a coding and decoding mechanism of the data to be transmitted, a parameter set of the data to be transmitted (for example, the subcarrier interval, etc.), a communication mode and a reference signal for the data to be transmitted.

That is to say, for different transmission formats, at least one of the resource for the data to be transmitted, the coding and decoding mechanism of the data to be transmitted, the parameter set of the data to be transmitted (for example, the subcarrier interval, etc.), the communication mode and the reference signal for the data to be transmitted varies.

In embodiments of the present disclosure, the transmission format is defined by at least one of the following: a frequency attribute of a resource, a time attribute of a resource, an attribute of a resource authorization, or an associated source address and/or target address.

That is, for different transmission formats, at least one of the frequency attribute of the resource, the time attribute of the resource, the attribute of the resource authorization, or the associated source address and/or target address varies.

For example, for different transmission formats configured by the data to be transmitted, at least one of the time attribute of the resources available for the data to be transmitted (for example, the number of time units such as symbols, or time slots of an available resource, the time length of a symbol), the frequency attribute of the resource available for the data to be transmitted (for example, the bandwidth occupied by all available resources, the subcarrier interval, the frequency of an available resource), the attribute of the resource authorization available for the data to be transmitted (for example, a size of the resource corresponding to a resource authorization), the source address and/or target address associated with the data to be transmitted (the source address associated with the data to be transmitted refers to that the data to be transmitted is sent by a terminal corresponding to the source address, and the target address associated with the data to be transmitted refers to that the data to be transmitted is sent to a terminal corresponding to the target address) varies.

It should be understood that embodiments of the present disclosure introduce multiple definition methods of the transmission format, and the multiple definition methods can be used in combination. For brevity, details are not described herein again.

According to embodiments, the communication mode may be a unicast communication mode, a multicast communication mode, or a broadcast communication mode.

The transmission format is the transmission format for the terminal to communicate with other terminals.

According to embodiments of the present disclosure, when the method 500 is applied in a sidelink communication scenario, if the communication mode is the unicast communication mode, the terminal may communicate with one terminal in the unicast mode; if the communication mode is the multicast communication mode, the terminal can communicate with a group of terminals in the multicast mode; if the communication mode is the broadcast communication mode, the terminal can communicate with other terminals in the broadcast mode.

As an example, when a feature varies in different systems, it can be determined that the transmission formats of the different systems are different.

For example, if the coding and decoding mechanism of a system A is the same as the coding and decoding mechanism of a system B, and the reference signal of the system A is different from the reference signal of the system B, it can be determined that the transmission format of the system A is different from the transmission format of the system B.

As an example, when two features are different in different systems, it can be determined that the transmission formats of the different systems are different.

For example, if the reference signal of a system A is the same as the reference signal of the system B, and the coding and decoding mechanism of the system A is different from the coding and decoding mechanism of the system B, it can be determined that the transmission format of the system A is the same as the transmission format of the system B.

For another example, if the reference signal of the system A is different from the reference signal of the system B, and the coding and decoding mechanism of the system A is different from the coding and decoding mechanism of the system B, it can be determined that the transmission format of the system A is different from the transmission format of the system B.

As an example, when three or more features are different in different systems, it can be determined that the transmission formats of the different systems are different.

For example, if the reference signal of a system A is the same as the reference signal of a system B, the coding and decoding mechanism of the system A is different from the coding and decoding mechanism of the system B, and the logical channel of system A is different from the logical channel of the system B, it can be determined that the transmission format of the system A is the same as the transmission format of the system B.

For another example, if the reference signal of a system A is different from the reference signal of a system B, the coding and decoding mechanism of the system A is different from the coding and decoding mechanism of the system B, and the logical channel of the system A is different from the logical channel of the system B, it can be determined that the transmission format of the system A is different from the transmission format of the system B.

In embodiments of the present disclosure, different communication standards (or systems) correspond to different transmission formats. The communication standard (or system) can be LTE or New Radio (NR).

Or, for LTE, the communication standards can be further divided into the communication standards of Release 14 and Release 15.

The transmission formats of different communication standards are not compatible.

For example, the receiving end of the LTE system cannot receive the data having the transmission format of the NR system sent by the transmitting end of the NR system.

Or, the sending end of the LTE system cannot send data with the transmission format of the NR system.

In embodiments of the present disclosure, the communication mode includes a resource selection mode.

The resource selection mode mentioned in embodiments of the present disclosure is a mode in which a network schedules resources, a mode in which a terminal autonomously selects resources, or a mode in which other terminals assist in resource selection.

A resource in embodiments of the present disclosure may correspond to a resource selection mode. For example, a resource selection mode of a resource can be a mode in which a network schedules resources, that is, the resource is scheduled by the network. If a resource selection mode of a resource is a mode in which a terminal autonomously selects resources, it means that the resource can be autonomously selected by the terminal. If the resource selection mode of a resource is a mode in which other terminals assist in resource selection, it means that the resource is selected with assistance of other terminals. Then, the terminal can select resources that meet the requirements of the resource selection mode according to the resource selection mode of each resource.

Alternatively, a carrier in embodiments of the present disclosure may correspond to a resource selection mode. For example, a resource selection mode of a carrier can be a mode in which a network schedules resources, that is, the resources of the carrier are scheduled by the network. If a resource selection mode of a carrier is a mode in which a terminal autonomously selects resources, it means that the resources of the carrier can be autonomously selected by the terminal. If the resource selection mode of a carrier is a mode in which other terminals assist in resource selection, it means that the resources of the carrier are selected with assistance of other terminals. Then, the terminal can select carriers that meet the requirements of the resource selection mode according to the resource selection mode of each carrier.

In embodiments of the present disclosure, transmission formats may be distinguished based on at least one of a physical layer feature of the first information, a logical channel identifier carried in the first information, a logical channel group identifier carried in the first information, a target address carried in the first information, a target address identifier carried in the first information, a carrier frequency used to send the data to be transmitted carried in the first information and a signaling format of the first information.

That is, the terminal can use at least one of the physical layer feature of the first information, the logical channel identifier carried in the first information, the logical channel group identifier carried in the first information, the target address carried in the first information, the target address identifier carried in the first information, the carrier frequency used to send the data to be transmitted carried in the first information and the signaling format of the first information to notify the network device of the transmission format of the data to be transmitted.

According to embodiments, the target address or target address identifier may be the target address or target address identifier of the service corresponding to the data to be transmitted, and different services correspond to different target address identifiers.

According to embodiments, the target address or the target address identifier may have a one-to-one correspondence with the identity (ID) of a service.

According to embodiments, the signaling format of the first information used to distinguish the transmission format may be the MAC layer format, the Radio Link Control (RLC) layer format, the Packet Data Convergence Protocol (PDCP) layer format, or Radio Resource Control (RRC layer format of the information.

The bytes of different MAC layer formats are different, for example, the division and number of byte blocks, and the meaning of byte blocks.

The bytes of different RLC layer formats are different, for example, the division and number of byte blocks, and the meaning of byte blocks.

The bytes of different RLC layer formats are different, for example, the division and number of byte blocks, and the meaning of byte blocks.

The bytes of different RRC layer formats are different, for example, the division and number of byte blocks, and the meaning of byte blocks.

According to embodiments, the logical channel or logical channel group may refer to the logical channel or logical channel group corresponding to the data to be transmitted.

According to embodiments, the target address or target address identifier may refer to the target address or target address identifier corresponding to the service. The service mentioned here may be the service to which the data to be transmitted belongs.

According to embodiments, the physical layer feature of the first information may be a resource, a parameter set, a reference signal, a coding and decoding mechanism, and a multiple access mode corresponding to the first information, and so on.

According to embodiments, the terminal may use RRC signaling and/or a MAC Control Element (CE) to send the first information to the network device.

According to embodiments, different carrier frequencies may correspond to different transmission formats, and the transmission format may be determined based on the carrier frequency which is used to transmit the data to be transmitted and is carried in the first information. For example, the transmission format under the LTE communication protocol or the transmission format under the NR communication protocol may be used.

Alternatively, in embodiments of the present disclosure (applicable to any method), the transmission format may also be defined by the carrier frequency for transmission (or further combined with other parameters).

It should be understood that carrying the carrier frequency in the first information in embodiments of the present disclosure can also be used in other scenarios other than the method 500. For example, a network device can send a downlink reference signal based on an LTE communication system or an NR communication system, and a terminal device can perform measurement on the downlink reference signal sent by network device based on the LTE communication system and/or the NR communication system, and can report the downlink reference signal corresponding to one of the communication systems. The terminal device can notify the network device of the system corresponding to the downlink reference signal by carrying the carrier frequency for the one of the communication systems to send the downlink reference signal, so that the network side can perform downlink transmission or uplink scheduling based on the transmission format corresponding to the system.

It should be understood that the first information may directly indicate the transmission format of the data to be transmitted, that is, the first information includes bits indicating the transmission format of the data to be transmitted.

Exemplarily, there is a bit in the first information sent by the terminal to the network device. When the bit value is 1, the transmission format of the data to be transmitted is format 1. After receiving the first information, the network device can determine that the transmission format of the transmitted data is format 1.

According to embodiments, there is a correspondence between a transmission format and at least one of a logical channel of the data to be transmitted, a logical channel group of the data to be transmitted, a target address of the data to be transmitted, a target address identifier of the data to be transmitted, a physical layer feature of information used to indicate a transmission format, a carrier frequency for sending the data to be transmitted, and a signaling format of information used to indicate the transmission format.

According to embodiments, the correspondence may be a one-to-one correspondence.

For example, a physical layer feature can correspond to a transmission format.

For example, a logical channel can correspond to a transmission format.

According to embodiments, the correspondence may also be a many-to-one correspondence.

For example, multiple logical channels can correspond to one transmission format.

According to embodiments, the correspondence may be preset, or may be determined according to signaling.

Exemplarily, the correspondence may be determined by the terminal. The terminal sends third information to the network device, and the third information is used for indicating the correspondence.

The network device may determine the transmission format of the data to be transmitted according to the first information and the correspondence.

According other embodiments, the correspondence may be determined by the network device. The network device sends fourth information to the terminal, and the fourth information is used to indicate the correspondence.

According embodiments, after receiving the fourth information, according to the correspondence and the data format of the data to be transmitted, the terminal can determine at least one of the logical channel of the data to be transmitted, the logical channel group of the data to be transmitted, the target address of the data to be transmitted, the target address identifier of the data to be transmitted, the physical layer feature of the first information, the carrier frequency for sending the data to be transmitted, and the signaling format of the first information, and send the first information to the network device based on determined information.

Alternatively, after the terminal receives the fourth information, the terminal can determine the transmission format of the data to be transmitted, according to the correspondence and at least one of the logical channel of the data to be transmitted, the logical channel group of the data to be transmitted, the target address of the data to be transmitted, the target address identifier of the data to be transmitted, the physical layer feature of the first information, the carrier frequency for sending the data to be transmitted, and the signaling format of the first indication information, and the terminal can send the first information to the network device.

In embodiments of the present disclosure, the network device can allow or support (or does not allow or does not support) the terminal to request resources for different transmission formats.

If the network device allows or supports the terminal to request resources for different transmission formats, the terminal may send the first indication information to the network device.

For example, if the network device can support both the LTE system and the NR system, and the network device allows or supports the terminal to request resources for different transmission formats, the terminal can send the first information to the network device.

If the network device does not allow or support the terminal to request resources for different transmission formats, the terminal does not send the first information to the network device.

According to embodiments, the network device may send fifth information to the terminal. The fifth information may indicate whether the network device allows or supports the terminal to request resources for different transmission formats.

In embodiments of the present disclosure, the terminal may also report the amount of data to be transmitted to the network device.

In embodiments of the present disclosure, the amount of data may be, but is not limited to, the amount currently buffered by the terminal. In this case, the first information may be a buffer status report (BSR).

According to embodiments, the terminal sends sixth information to the network device, and the sixth information may include the amount of data to be transmitted.

Correspondingly, after receiving the first information and the sixth information, the network device can determine the transmission format of the data to be transmitted and the amount of the data to be transmitted.

Under such condition, the network device can allocate resources to the terminal based on the transmission format and amount of the data to be transmitted, so that the terminal can transmit the data.

It should be understood that embodiments of the present disclosure do not specifically limit the sequence in which the terminal sends the first information and the sixth information to the network device.

For example, the terminal may first send the sixth information to the network device, and then the first information; or, the terminal may send the first information to the network device first, and then the sixth information. Alternatively, the first information and the sixth information may be sent at the same time, that is, the first information and the sixth information may be carried in the same message.

It should also be understood that in embodiments of the present disclosure, "first", "second", and "third" are only used to distinguish different objects, but do not limit the scope of the embodiments of the present disclosure.

In 520, the network device receives the first information sent by the terminal. The first information is used to indicate the transmission format of the data to be transmitted.

In embodiments of the present disclosure, after the network device receives the first information sent by the terminal which is used to indicate the transmission format of the data to be transmitted, the network device may allocate resources to the terminal for data transmission based on the transmission format of the data to be transmitted.

At this time, the network device sends second information to the terminal, and the second information may indicate the resources allocated by the network device to the terminal. Correspondingly, the terminal can send the data to be transmitted based on the resources allocated by the network device for the transmission format of the data to be transmitted.

According to embodiments, after receiving the first information that indicates the transmission format of the data to be transmitted from the terminal, the network device may determine the transmit power of the downlink transmission based on the transmission format of the data to be transmitted.

According to embodiments, after receiving the first information that indicates the transmission format of the data to be transmitted from the terminal, the network device may determine the transmission mode for communicating with the terminal based on the transmission format of the data to be transmitted.

In embodiments of the present disclosure, when the network device receives the transmission format and volume of the data to be transmitted, the network device may allocate resources to the terminal for data transmission based on the transmission format and volume of the data to be transmitted.

At this time, the second information sent by the network device to the terminal may indicate the resources allocated by the network device for the transmission format and volume of the data to be transmitted.

Correspondingly, the terminal can send the data to be transmitted based on the resources allocated by the network device for the transmission format and volume of the data to be transmitted.

According to embodiments, when the network device further receives the volume of the data to be transmitted reported by the terminal, the network device may determine whether to communicate with the terminal based on the transmission format and volume of the data to be transmitted.

According to embodiments, when the network device further receives the volume of the data to be transmitted reported by the terminal, the network device may determine the transmit power of the downlink transmission based on the transmission format and volume of the data to be transmitted.

According to embodiments, when the network device further receives the data volume of the data to be transmitted reported by the terminal, the network device may determine the transmission mode for communicating with the terminal based on the transmission format and volume of the data to be transmitted

In embodiments of the present disclosure, the terminal sends the first information to the network device, and the first information is used to indicate the transmission format of the data to be transmitted. The network device can schedule the terminal based on the first information, and realize the scheduling of the terminal based on the transmission format. Accordingly, when the terminal is scheduled, the situation of the terminal can be better understood and the communication performance can be improved.

It should be understood that the descriptions of the above aspects of the embodiments of the present disclosure may be mutually applicable. For example, the description about the transmission format and the description about the QoS attribute may be mutually applicable. For brevity, the same description will not be repeated in each method.

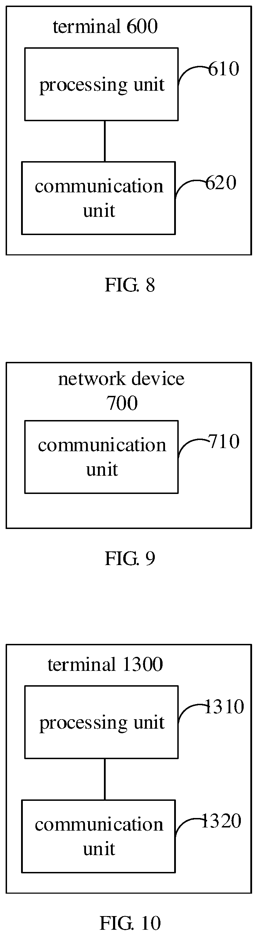

FIG. 8 is a schematic block diagram of a terminal 600 according to an embodiment of the present disclosure. As shown in FIG. 8, the terminal 600 includes a communication unit 620. The terminal 600 may further include a processing unit 610.

According to embodiments of the present disclosure, the processing unit 610 is configured to select a first carrier or a first resource pool from at least one carrier or at least one resource pool according to a QoS attribute configuration and/or a transmission format configuration corresponding to the at least one carrier or the at least one resource pool. The communication unit 620 is configured to communicate with a second terminal using the first carrier or the first resource pool.

According to embodiments of the present disclosure, the processing unit 610 is further configured to:

based on the QoS attribute configuration and/or the transmission format configuration of the first carrier or the first resource pool, and a QoS attribute requirement and/or a transmission format requirement of data to be transmitted, select, from the data to be transmitted, data which is to be transmitted by the target resource.

According to embodiments of the present disclosure, the processing unit 610 is further configured to:

select the first carrier or the first resource pool from the at least one carrier or the at least one resource pool, according to the QoS attribute configuration and/or the transmission format configuration corresponding to the at least one carrier or the at least one resource pool and at least one of the following:
a QoS attribute requirement of at least part of the data to be transmitted;
a transmission format requirement of at least part of the data to be transmitted;
a transmission mode of at least part of the data to be transmitted;
a channel busy ratio of the at least one carrier or the at least one resource pool;
a correspondence between a channel busy ratio requirement and a service priority identifier corresponding to the at least one carrier or the at least one resource pool; or
a service priority identifier of at least part of the data to be transmitted.

According to embodiments of the present disclosure, the first carrier is a carrier that satisfies at least one of the following conditions among the at least one carrier:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

According to embodiments of the present disclosure, the communication unit 620 is further configured to, in the case that the processing unit 610 selects the first carrier from the at least one carrier, communicate with the second terminal using a second resource pool corresponding to the first carrier.

According to embodiments of the present disclosure, the processing unit 610 is further configured to:
in the case of selecting the first carrier from the at least one carrier, according to a QoS attribute configuration and/or a transmission format configuration of at least part of the at least one resource pool corresponding to the first carrier, select the second resource pool from the at least part of the at least one resource pool corresponding to the first carrier.

According to embodiments of the present disclosure, the second resource pool is a resource pool that satisfies at least one of the following conditions among the at least part of the at least one resource pool corresponding to the first carrier:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

According to embodiments of the present disclosure, the first resource pool is a resource pool that satisfies at least one of the following conditions among the at least one resource pool:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted; or
having a transmission format configuration that meets a transmission format requirement of at least part of the data to be transmitted.

According to embodiments of the present disclosure, the processing unit 610 is further configured to:
in a case that a currently used carrier or a currently used resource pool cannot meet a QoS attribute requirement of at least part of the data to be transmitted and/or at least part of the data to be transmitted is sent in a non-single transmission mode, selecting the first carrier or the first resource pool from the at least one carrier or the at least one resource pool.

According to embodiments of the present disclosure, different communication standards correspond to different transmission formats. The communication standards may include LTE or NR.

According to embodiments of the present disclosure, the transmission format is defined by a communication mode.

According to embodiments of the present disclosure, the communication mode is a unicast communication mode, a multicast communication mode, or a broadcast communication mode.

According to embodiments of the present disclosure, the communication mode includes a resource selection mode.

According to embodiments of the present disclosure, the resource selection mode is a mode in which a network schedules resources, a mode in which a terminal autonomously selects resources, or a mode in which other terminals assist in resource selection.

According to embodiments of the present disclosure, the transmission format is defined by at least one of the following: a frequency attribute of a resource, a time attribute of a resource, an attribute of resource authorization, or an associated source address and/or destination address.

According to embodiments of the present disclosure, the QoS attribute includes a QoS attribute.

According to embodiments of the present disclosure, the transmission format configuration and/or the QoS attribute configuration corresponding to the at least one carrier or at least one resource pool is configured by a higher layer of the first terminal, configured by a network device, or configured by a terminal other than the first terminal.

According to embodiments of the present disclosure, the QoS attribute requirement and/or the transmission format requirement of the data to be transmitted are configured by a higher layer of the first terminal, configured by a network device, or configured by a terminal other than the first terminal.

It should be understood that the terminal 600 may correspond to the first terminal in the method 300 to implement the corresponding operations of the first terminal. For brevity, details are not described herein again.

According to embodiments of the present disclosure, the processing unit 610 is configured to: select at least one first logical channel according to a transmission format configured by data to be transmitted in at least one logical channel of the terminal; and based on Radio Link Control (RLC) Protocol Data Unit (PDU) of the at least one first logical channel, generate a Media Access Control (MAC) PDU.

The communication unit 620 is configured to send the MAC PDU on a target resource.

According to embodiments of the present disclosure, the processing unit 610 is further configured to select the at least one first logical channel according to the first transmission format and the transmission format configured by the data to be transmitted in the at least one logical channel.

According to embodiments of the present disclosure, the transmission format configured by the data to be transmitted in the first logical channel includes the first transmission format.

According to embodiments of the present disclosure, the processing unit 610 is further configured to:
determine the first transmission format according to a transmission format configured by the target resource configuration and/or a transmission format configured by at least part of the data to be transmitted.

According to embodiments of the present disclosure, the processing unit 610 is further configured to:
determine the first transmission format according to a QoS attribute configured by the target resource and/or a QoS attribute configured by at least part of the data to be transmitted.

According to embodiments of the present disclosure, the processing unit 610 is further configured to:
determine the first transmission format according to the QoS attribute configured by the target resource and/or the QoS attribute configured by the at least part of the data to be transmitted, and a correspondence between QoS attributes and transmission formats.

According to embodiments of the present disclosure, the at least part of the data to be transmitted belongs to the data to be transmitted in the at least one logical channel.

According to embodiments of the present disclosure, the first transmission format includes at least one of transmission formats configured by the target resource.

According to embodiments of the present disclosure, the first transmission format includes at least one of transmission formats configured by the at least part of the data to be transmitted.

According to embodiments of the present disclosure, the processing unit 610 is further configured to:
determine a first QoS attribute; and
select the at least one first logical channel according to the first QoS attribute and the QoS attribute configured by the data to be transmitted in the at least one logical channel.

According to embodiments of the present disclosure, the QoS attribute configured by the data to be transmitted in the first logical channel includes the first QoS attribute.

According to embodiments of the present disclosure, the processing unit 610 is further configured to:
determine the first QoS attribute according to a QoS attribute configured by the target resource and/or a QoS attribute configured by at least part of the data to be transmitted.

According to embodiments of the present disclosure, the processing unit 610 is further configured to:
determine the first QoS attribute according to a transmission format configured by the target resource and/or a transmission format configured by at least part of the data to be transmitted.

According to embodiments of the present disclosure, the processing unit 610 is further configured to:
determine the first QoS attribute according to the transmission format configured by the target resource and/or the transmission format configured by at least part of the data to be transmitted, and a correspondence between QoS attributes and transmission formats.

According to embodiments of the present disclosure, the at least part of the data to be transmitted belongs to the data to be transmitted in the at least one logical channel.

According to embodiments of the present disclosure, the first QoS attribute includes at least one QoS attribute among QoS attributes configured by the target resource.

According to embodiments of the present disclosure, the first QoS attribute includes at least one QoS attribute among QoS attributes configured by the at least part of the data to be transmitted.

According to embodiments of the present disclosure, the terminal 600 is applied in a sidelink communication.

According to embodiments of the present disclosure, different communication standards correspond to different transmission formats. The communication standards include LTE or NR.

According to embodiments of the present disclosure, the transmission format is defined by a communication mode.

According to embodiments of the present disclosure, the communication mode is a unicast communication mode, a multicast communication mode, or a broadcast communication mode.

According to embodiments of the present disclosure, the communication mode includes a resource selection mode.

According to embodiments of the present disclosure, the resource selection mode is a mode in which a network schedules resources, a mode in which a terminal autonomously selects resources, or a mode in which other terminals assist in resource selection.

According to embodiments of the present disclosure, the transmission format is defined by at least one of the following: a frequency attribute of a resource, a time attribute of a resource, an attribute of a resource authorization, and an associated source address and/or destination address.

According to embodiments of the present disclosure, the QoS attribute include a time T2.

According to embodiments of the present disclosure, the transmission format and/or QoS attribute configured by the data to be transmitted are configured by a higher layer of the terminal, configured by a network device, or configured by a terminal other than the terminal.

According to embodiments of the present disclosure, the processing unit is further configured to: select a logical channel set; and
select the at least one first logical channel from the logical channel set according to the transmission format and/or the QoS attribute configured by the data to be transmitted in the logical channel set.

According to embodiments of the present disclosure, logical channels in the logical channel set have a same target address.

It should be understood that the terminal 600 may correspond to the terminal in the method 400 to implement the corresponding operations of terminal. For brevity, details are not described herein again.

According to embodiments of the present disclosure, the communication unit 620 is configured to:
send first information to a network device, wherein the first information is used to indicate a transmission format of data to be transmitted.

According to embodiments of the present disclosure, the communication unit 620 is further configured to:
receive second information, wherein the second information is used to indicate a resource allocated by the network device; and
send the data to be transmitted based on the resource.

According to embodiments of the present disclosure, the first information indicates the transmission format of the data to be transmitted by at least one of a logical channel identifier of the data to be transmitted carried in the first information, a logical channel group identifier of the data to be transmitted carried in the first information, a destination address of the data to be transmitted carried in the first information, a destination address identifier of the data to be transmitted carried in the first information, a physical layer feature of the first information, a carrier frequency for sending the data to be transmitted, and a signaling format of the first information.

According to embodiments of the present disclosure, the communication unit 620 is further configured to:
send third information to the network device, wherein the third information includes a correspondence between a transmission format and at least one of a logical channel identifier of data, a logical channel group identifier of data, a target address of data, a target address identifier of data, a physical layer feature of information used to indicate a transmission format, a carrier frequency for sending data, and a signaling format of information used to indicate the transmission format.

According to embodiments of the present disclosure, the communication unit 620 is further configured to:
receive fourth information sent by the network device, wherein the fourth information includes a correspondence between a transmission format and at least one of a logical channel identifier of data, a logical channel group identifier of data, a target address of data, a target address identifier of data, a physical layer feature of information used to indicate a transmission format, a carrier frequency for sending data, and a signaling format of information used to indicate the transmission format.

According to embodiments of the present disclosure, the communication unit 620 is further configured to:
receive fifth information sent by the network device, wherein the fifth information includes whether the network device allows or supports the terminal to request a resource for different transmission formats;
the communication unit 620 is further configured to:
if the network device allows or supports the terminal to request the resource for different transmission formats, send the first information to the network device.

According to embodiments of the present disclosure, the communication unit 620 is further configured to:
send the first information to the network device using Radio Resource Control (RRC) signaling, and/or a Media Access Control (MAC) Control Element (CE).

According to embodiments of the present disclosure, the communication unit 620 is further configured to:
report data volume of the data to be transmitted to the network device.

According to embodiments of the present disclosure, the signaling format of the first information used to indicate the transmission format is the MAC layer format, the RLC layer format, the PDCP layer format or the RRC layer format of the first information.

According to embodiment of the present disclosure, a Long-Term Evolution (LTE) system and a New Radio (NR) system use different transmission formats for data transmission.

According to embodiment of the present disclosure, the transmission format is defined by a communication mode.

According to embodiment of the present disclosure, the communication mode is a unicast communication mode, a multicast communication mode, or a broadcast communication mode.

According to embodiment of the present disclosure, the transmission format is defined by at least one of the following: a frequency attribute of a resource, a time attribute of a resource, an attribute of a resource authorization, or an associated source address and/or destination address.

It should be understood that the terminal 600 may correspond to the terminal in the method 500 to implement the corresponding operations of the terminal. For brevity, details are not described herein again

FIG. 9 is a schematic block diagram of a network device 700 according to an embodiment of the present disclosure. As shown in FIG. 9, the network device 700 includes a communication unit 710.

According to embodiment of the present disclosure, the communication unit 710 is configured to receive first information sent from a terminal, wherein the first information is used to indicate a transmission format of data to be transmitted.

According to embodiment of the present disclosure, the communication unit 710 is further configured to: send second information to the terminal, wherein the second information is used to indicate a resource allocated by the network device 700.

According to embodiment of the present disclosure, the first indication information indicates the transmission format of the data to be transmitted by at least one of a logical channel identifier of the data to be transmitted carried in the first information, a logical channel group identifier of the data to be transmitted carried in the first information, a destination address of the data to be transmitted carried in the first information, a destination address identifier of the data to be transmitted carried in the first information, a physical layer feature of the first information, a carrier frequency for sending the data to be transmitted, and a signaling format of the first information.

According to embodiment of the present disclosure, the communication unit 710 is further configured to:
receive third information sent from the terminal, wherein the third information includes a correspondence between a transmission format and at least one of a logical channel identifier of data, a logical channel group identifier of data, a target address identifier of data, a target address identifier of data, a physical layer feature of information used to indicate a transmission format, a carrier frequency for sending data, and a signaling format of information used to indicate the transmission format.

According to embodiment of the present disclosure, the communication unit 710 is further configured to:
send fourth information to the terminal, wherein the fourth information includes a correspondence between a transmission format and at least one of a logical channel identifier of data, a logical channel group identifier of data, a target address of data, a target address identifier of data, a physical layer feature of information used to indicate a transmission format, a carrier frequency for sending data, and a signaling format of information used to indicate the transmission format.

According to embodiment of the present disclosure, the communication unit 710 is further configured to: send fifth information to the terminal, wherein the fifth information includes whether the network device allows or supports the terminal to request a resource for different transmission formats;
the communication unit 710 is further configured to:
if the network device allows or supports the terminal to request the resource for different transmission formats, receive the first information sent by the terminal.

According to embodiment of the present disclosure, the first information is carried in RRC signaling, and/or, MAC CE.

According to embodiment of the present disclosure, the communication unit 710 is configured to: receive data volume of the data to be transmitted reported by the terminal device.

According to embodiment of the present disclosure, the signaling format of the first information used to indicate the transmission format is the MAC layer format, the RLC layer format, the PDCP layer format, or the RRC layer format of the first information.

According to embodiment of the present disclosure, a Long-Term Evolution (LTE) system and a New Radio (NR) system use different transmission formats for data transmission.

According to embodiment of the present disclosure, the transmission format is defined by a communication mode.

According to embodiment of the present disclosure, the communication mode is a unicast communication mode, a multicast communication mode, or a broadcast communication mode.

According to embodiment of the present disclosure, the transmission format is defined by at least one of the following: a frequency attribute of a resource, a time attribute of a resource, an attribute of a resource authorization, or an associated source address and/or destination address.

It should be understood that the network device 700 may correspond to the network device in the method 500 to implement the corresponding operations of the network device. For brevity, details are not described herein again

FIG. 10 is a schematic block diagram of a terminal 1300 according to an embodiment of the present disclosure. The terminal 1300 includes a communication unit 1320 and a processing unit 1310.

The processing unit 1310 is configured to select a first resource from at least one resource according to a Quality of Service (QoS) attribute configuration and/or a transmission format configuration corresponding to the at least one resource. The communication unit 1320 is configured to communicate with a second terminal using the first resource.

The processing unit 1310 is further configured to: based on the QoS attribute configuration and/or the transmission format configuration of the first resource, and a QoS attribute requirement and/or a transmission format requirement of data to be transmitted, select, from the data to be transmitted, data which is to be transmitted by the first resource.

According to embodiments of the present disclosure, the processing unit 1320 is further configured to:
select the first resource from the at least one resource, according to the QoS attribute configuration and/or the transmission format configuration corresponding to the at least one resource and at least one of the following:
a QoS attribute requirement of at least part of the data to be transmitted;
a transmission format requirement of at least part of the data to be transmitted;
a transmission mode of at least part of the data to be transmitted; or
a service priority identifier of at least part of the data to be transmitted.

According to embodiments of the present disclosure, the first resource is a resource that satisfies at least one of the following conditions among the at least one resource:
having a QoS attribute configuration that meets a QoS attribute requirement of at least part of the data to be transmitted; or
having a transmission format configuration that meets a transmission format requirement of at least part of the data to be transmitted.

According to embodiments of the present disclosure, the processing unit 1310 is further configured to:
in a case that a currently used resource cannot meet a QoS attribute requirement of at least part of the data to be transmitted and/or at least part of the data to be transmitted is sent in a non-single transmission mode, select the first resource from the at least one resource.

According to embodiments of the present disclosure, different communication standards correspond to different transmission formats.

According to embodiments of the present disclosure, the communication standards include LTE or NR.

According to embodiments of the present disclosure, the transmission format is defined by a communication mode.

According to embodiments of the present disclosure, the communication mode is a unicast communication mode, a multicast communication mode, or a broadcast communication mode.

According to embodiments of the present disclosure, the communication mode includes a resource selection mode.

According to embodiments of the present disclosure, the resource selection mode is a mode in which a network schedules resources, a mode in which a terminal autonomously selects resources, or a mode in which other terminals assist in resource selection.

According to embodiments of the present disclosure, the transmission format is defined by at least one of the following: a frequency attribute of a resource, a time attribute of a resource, an attribute of resource authorization, or an associated source address and/or destination address.

According to embodiments of the present disclosure, the QoS attribute includes a time T2.

According to embodiments of the present disclosure, the transmission format configuration and/or the QoS attribute configuration corresponding to the at least one carrier or at least one resource pool is configured by a higher layer of the first terminal, configured by a network device, or configured by a terminal other than the first terminal.

According to embodiments of the present disclosure, the QoS attribute requirement and/or the transmission format requirement of the data to be transmitted are configured by a higher layer of the first terminal, configured by a network device, or configured by a terminal other than the first terminal.

It should be understood that the terminal device 1300 may correspond to the terminal device in the method 1200 to implement the corresponding operations of terminal device. For brevity, details are not described herein again.

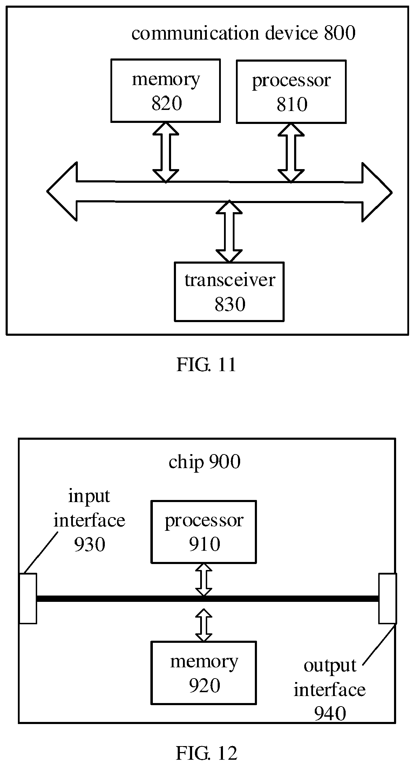

FIG. 11 is a schematic block diagram of a communication device 800 according to an embodiment of the present disclosure. The communication device 800 shown in FIG. 11 includes a processor 810. The processor 810 can call and run a computer program from a memory to implement the methods in embodiments of the present disclosure.

According to embodiments, as shown in FIG. 11, the communication device 800 may further include a memory 820. The processor 810 can call and run a computer program from the memory 820 to implement the methods in embodiments of the present disclosure.

The memory 820 may be a separate device independent of the processor 810, or may be integrated in the processor 810.

According to embodiments, as shown in FIG. 11, the communication device 800 may further include a transceiver 830, and the processor 810 may control the transceiver 830 to communicate with other devices. Specifically, the transceiver 830 may send information or data to other devices, or may receive information or data sent by other devices.

The transceiver 830 may include a transmitter and a receiver. The transceiver 80 may further include one or more antennas.

According to embodiments, the communication device 800 may implement corresponding operations implemented by the terminal or the network device in the methods in embodiments of the present disclosure. For brevity, repeated descriptions are omitted here.

FIG. 12 is a schematic block diagram of a chip 900 according to an embodiment not covered by the claims. The chip 900 shown in FIG. 12 includes a processor 910. The processor 910 can call and run a computer program from the memory to implement methods in embodiments of the present disclosure.

According to embodiments, as shown in FIG. 12, the chip 900 may further include a memory 920. The processor 910 may call and run a computer program from the memory 920 to implement methods in embodiments of the present disclosure.

The memory 920 may be a separate device independent of the processor 910, or may be integrated in the processor 910.

According to embodiments, the chip 900 may further include an input interface 930. The processor 910 can control the input interface 930 to communicate with other devices or chips. Specifically, the input interface 930 can obtain information or data sent by other devices or chips.

According to embodiments, the chip 900 may further include an output interface 940. The processor 910 can control the output interface 940 to communicate with other devices or chips. Specifically, the output interface 940 can output information or data to other devices or chips.

According to embodiments, the chip can be applied to the terminal or network device in embodiments of the present disclosure, and the chip can implement corresponding operations performed by the terminal or network device in methods of embodiments of the present disclosure. For brevity, repeated descriptions are omitted here.

It should be understood that the chip in embodiments of the present disclosure may also be referred to as a system-level chip, a system chip, a chip system, or a system-on-chip, etc.

The processor may be a general-purpose processor, a Digital Signal Processor (DSP), a Field Programmable Gate Array (FPGA), an Application Specific Integrated Circuit (ASIC), or other programmable logic devices, a transistor logic device, a discrete hardware component, etc. The general-purpose processor may be a microprocessor or any conventional processor.

The memory mentioned above may be a volatile memory or a non-volatile memory, or may include both the volatile and the non-volatile memory. The non-volatile memory can be a Read-Only Memory (ROM), a Programmable ROM (PROM), an Erasable PROM (EPROM), an Electrically EPROM (EEPROM) or a flash memory. The volatile memory may be Random Access Memory (RAM).

It should be understood that the forgoing memory is exemplary but not restrictive. For example, the memory in embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-link DRAM (SLDRAM) or a Direct Rambus RAM (DR RAM), etc. That is to say, the memory in embodiments of the present disclosure is intended to include but not limited to these and any other suitable types of memory.

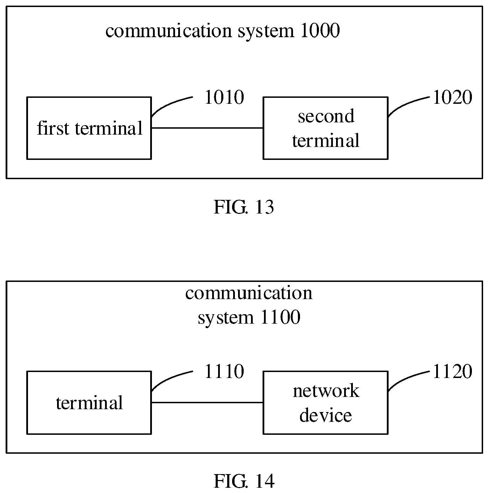

FIG. 13 is a schematic block diagram of a communication system 1000 according to an embodiment not covered by the claims. As shown in FIG. 13, the communication system 1000 includes a first terminal 1010 and a second terminal 1020. The first terminal 1010 can be used to implement corresponding functions implemented by the first terminal in the foregoing methods. The second terminal 1020 can be used to implement corresponding functions implemented by the second terminal in the foregoing methods. For brevity, repeated descriptions are omitted here.

FIG. 14 is a schematic block diagram of a communication system 1100 according to an embodiment of the present disclosure. As shown in FIG. 14, the communication system 1100 includes a terminal 1110 and a network device 1120. The terminal 1110 can be used to implement corresponding functions implemented by the terminal device in the foregoing methods. The network device 1120 can be used to implement the corresponding functions implemented by the network device in the foregoing methods. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

## Claims

1. A communication method for sidelink, comprising:
selecting (310), by a first terminal, a first resource pool from at least one resource pool according to a transmission format configuration corresponding to the at least one resource pool; and
communicating (320), by the first terminal, with a second terminal using the first resource pool;
wherein selecting the first resource pool comprises:
selecting the first resource pool from the at least one resource pool, according to the transmission format configuration corresponding to the at least one resource pool and a transmission format requirement of at least part of data to be transmitted;
wherein the first resource pool is a resource pool that satisfies the following condition among the at least one resource pool: having a transmission format configuration that meets the transmission format requirement of the at least part of the data to be transmitted.

2. The method according to claim 1, further comprising:
based on the transmission format configuration of the first resource pool, and a transmission format requirement of data to be transmitted, selecting, from the data to be transmitted, data which is to be transmitted by the first resource pool.

3. The method according to claim 1 or 2, wherein selecting of the first resource pool is further based on at least one of the following:
a QoS attribute requirement of at least part of the data to be transmitted;
a transmission mode of at least part of the data to be transmitted;
a channel busy ratio of the at least one resource pool;
a correspondence between a channel busy ratio requirement and a service priority identifier corresponding to the at least one resource pool; or
a service priority identifier of at least part of the data to be transmitted.

4. The method according to any one of claims 1 to 3, wherein the first resource pool is a resource pool that further satisfies at least one of the following conditions among the at least one resource pool:
having the lowest channel busy ratio;
having a channel busy ratio that meets a channel busy ratio requirement corresponding to a service priority identifier of at least part of the data to be transmitted;
having a QoS attribute configuration that meets a QoS attribute requirement of at least part of the data to be transmitted.

5. The method according to any one of claims 1 to 4, wherein selecting the first resource pool comprises:
in a case that at least part of the data to be transmitted is sent in a non-single transmission mode, selecting the first resource pool from the at least one resource pool.

6. The method according to any one of claims 1 to 5, wherein different communication standards correspond to different transmission formats.

7. The method according to any one of claims 1 to 6, wherein the transmission format is defined by a communication mode.

8. The method according to claim 7, wherein the communication mode is a unicast communication mode, a multicast communication mode, or a broadcast communication mode.

9. The method according to claim 7, wherein the communication mode comprises a resource selection mode.

10. The method according to any one of claims 1 to 9, wherein the transmission format is defined by at least one of the following: a frequency attribute of a resource, a time attribute of a resource, an attribute of resource authorization, or an associated source address and/or destination address.

11. A terminal device, applied to a sidelink communication and configured to perform the method according to any one of claims 1 to 10.

## Patentansprüche

1. Kommunikationsverfahren für Sidelink, umfassend:
Auswählen (310), durch ein erstes Endgerät, eines ersten Ressourcenpools aus mindestens einem Ressourcenpool gemäß einer dem mindestens einen Ressourcenpool entsprechenden Übertragungsformatkonfiguration; und
Kommunikation (320) durch das erste Endgerät mit einem zweiten Endgerät unter Verwendung des ersten Ressourcenpools;
wobei das Auswählen des ersten Ressourcenpools umfasst:
Auswählen des ersten Ressourcenpools aus dem mindestens einen Ressourcenpool gemäß der Übertragungsformatkonfiguration, die dem mindestens einen Ressourcenpool und einer Übertragungsformatanforderung von mindestens einem Teil der zu übertragenden Daten entspricht;
wobei der erste Ressourcenpool ein Ressourcenpool ist, der unter dem mindestens einen Ressourcenpool die folgende Bedingung erfüllt: mit einer Übertragungsformatkonfiguration, die die Übertragungsformatanforderung des mindestens einen Teils der zu übertragenden Daten erfüllt.

2. Verfahren gemäß Anspruch 1, ferner umfassend:
basierend auf der Übertragungsformatkonfiguration des ersten Ressourcenpools und einer Übertragungsformatanforderung der zu übertragenden Daten Auswählen von Daten aus den zu übertragenden Daten, die durch den ersten Ressourcenpool zu übertragen sind.

3. Verfahren gemäß Anspruch 1 oder 2, wobei das Auswählen des ersten Ressourcenpools ferner auf mindestens einem des Folgenden basiert:
einer QoS-Attributanforderung für mindestens einen Teil der zu übertragenden Daten;
einem Übertragungsmodus für mindestens einen Teil der zu übertragenden Daten;
einem Kanalbelegungsverhältnis des mindestens einen Ressourcenpools;
einer Entsprechung zwischen einer Kanalbelegungsverhältnisanforderung und einer Dienstprioritätskennung, die dem mindestens einen Ressourcenpool entspricht; oder
einer Dienstprioritätskennung mindestens eines Teils der zu übertragenden Daten.

4. Verfahren gemäß einem der Ansprüche 1 bis 3, wobei der erste Ressourcenpool ein Ressourcenpool ist, der ferner mindestens eine der folgenden Bedingungen unter dem mindestens einen Ressourcenpool erfüllt:
mit dem geringsten Kanalbelegungsverhältnis;
mit einem Kanalbelegungsverhältnis, das eine Kanalbelegungsverhältnisanforderung erfüllt, die einer Dienstprioritätskennung mindestens eines Teils der zu übertragenden Daten entspricht;
mit einer QoS-Attributkonfiguration, die eine QoS-Attributanforderung für mindestens einen Teil der zu übertragenden Daten erfüllt.

5. Verfahren gemäß einem der Ansprüche 1 bis 4, wobei das Auswählen des ersten Ressourcenpools umfasst:
in einem Fall, dass mindestens ein Teil der zu übertragenden Daten in einem Nicht-Einzelübertragungsmodus übertragen wird, Auswählen des ersten Ressourcenpools aus dem mindestens einen Ressourcenpool.

6. Verfahren gemäß einem der Ansprüche 1 bis 5, wobei unterschiedliche Kommunikationsstandards unterschiedlichen Übertragungsformaten entsprechen.

7. Verfahren gemäß einem der Ansprüche 1 bis 6, wobei das Übertragungsformat durch einen Kommunikationsmodus definiert ist.

8. Verfahren gemäß Anspruch 7, wobei der Kommunikationsmodus ein Unicast-Kommunikationsmodus, ein Multicast-Kommunikationsmodus oder ein Broadcast-Kommunikationsmodus ist.

9. Verfahren gemäß Anspruch 7, wobei der Kommunikationsmodus einen Ressourceauswahlmodus umfasst.

10. Verfahren gemäß einem der Ansprüche 1 bis 9, wobei das Übertragungsformat durch mindestens eines des Folgenden definiert ist: eines Frequenzattributs einer Ressource, eines Zeitattributs einer Ressource, eines Attributs einer Ressourcenautorisierung oder einer zugeordneten Quelladresse und/oder Zieladresse.

11. Endgerätevorrichtung, die für eine Sidelink-Kommunikation verwendet wird und dazu konfiguriert ist, das Verfahren gemäß einem der Ansprüche 1 bis 10 durchzuführen.

## Revendications

1. Procédé de communication pour liaison latérale, comprenant les étapes suivantes :
sélectionner (310), par un premier terminal, un premier groupe de ressources à partir d'au moins un groupe de ressources selon une configuration de format de transmission correspondant à l'au moins un groupe de ressources ; et
communiquer (320), par le premier terminal, avec un second terminal en utilisant le premier groupe de ressources ;
où la sélection du premier groupe de ressources comprend l'étape suivante :
sélectionner le premier groupe de ressources à partir d'au moins un groupe de ressources, en fonction de la configuration du format de transmission correspondant à l'au moins un groupe de ressources et d'une exigence de format de transmission d'au moins une partie des données à transmettre ;
où le premier groupe de ressources est un groupe de ressources qui satisfait la condition suivante parmi les au moins un groupe de ressources : avoir une configuration de format de transmission qui répond à l'exigence de format de transmission d'au moins une partie des données à transmettre.

2. Procédé selon la revendication 1, comprenant en outre l'étape suivante :
sur la base de la configuration du format de transmission du premier groupe de ressources et d'une exigence de format de transmission des données à transmettre, sélectionner, parmi les données à transmettre, les données qui doivent être transmises par le premier groupe de ressources.

3. Procédé selon la revendication 1 ou 2, dans lequel la sélection du premier groupe de ressources est en outre basée sur au moins l'un des éléments suivants :
une exigence d'attribut de qualité de service d'au moins une partie des données à transmettre ;
un mode de transmission d'au moins une partie des données à transmettre ;
un taux d'occupation des canaux de l'au moins un groupe de ressources ;
une correspondance entre une exigence de taux d'occupation des canaux et un identifiant de priorité de service correspondant à l'au moins un groupe de ressources ; ou
un identifiant de priorité de service d'au moins une partie des données à transmettre.

4. Procédé selon l'une quelconque des revendications 1 à 3, dans lequel le premier groupe de ressources est un groupe de ressources qui satisfait en outre à au moins l'une des conditions suivantes parmi l'au moins un groupe de ressources :
avoir le taux d'occupation des canaux le plus bas ;
avoir un taux d'occupation des canaux qui répond à une exigence de taux d'occupation des canaux correspondant à un identifiant de priorité de service d'au moins une partie des données à transmettre ;
avoir une configuration d'attribut de qualité de service qui répond à une exigence d'attribut de qualité de service d'au moins une partie des données à transmettre.

5. Procédé selon l'une quelconque des revendications 1 à 4, dans lequel la sélection du premier groupe de ressources comprend :
dans le cas où au moins une partie des données à transmettre est transmise dans un mode de transmission non unique, sélectionner le premier groupe de ressources à partir d'au moins un groupe de ressources.

6. Procédé selon l'une quelconque des revendications 1 à 5, dans lequel différentes normes de communication correspondent à différents formats de transmission.

7. Procédé selon l'une quelconque des revendications 1 à 6, dans lequel le format de transmission est défini par un mode de communication.

8. Procédé selon la revendication 7, dans lequel le mode de communication est un mode de communication en diffusion individuelle, un mode de communication multidestinataires ou un mode de communication par diffusion.

9. Procédé selon la revendication 7, dans lequel le mode de communication comprend un mode de sélection des ressources.

10. Procédé selon l'une quelconque des revendications 1 à 9, dans lequel le format de transmission est défini par au moins l'un des éléments suivants : un attribut de fréquence d'une ressource, un attribut de temps d'une ressource, un attribut d'autorisation des ressources, ou une adresse source et/ou une adresse de destination associées.

11. Dispositif terminal, appliqué à une communication par liaison latérale et configuré pour exécuter le procédé selon l'une quelconque des revendications 1 à 10.
